# EUROPEAN PATENT APPLICATION

(11) **EP 4 621 270 A1**
(43) Date of publication of application: **24.09.2025**
(21) Application number: 24164450.9
(22) Date of filing: 19.03.2024
(51) Int. Cl.: F16K 5/02, F16K 5/16, F16K 11/083, F16K 31/524

(54) **ROTATING MULTIPORT VALVE**

(71) Applicant: MoldTecs-01-2022 GmbH, 38667 Bad Harzburg (DE)
(72) Inventor: Lardeux, Sébastien, 53410 Saint Quen Des Toits (FR); Foulboeuf, Gwenael, 53260 Entrammes (FR); Lelièvre, Guillaume, 53240 Saint Jean sur Mayenne (FR); Manzella, Tony, 53000 Laval (FR); Badibanga, Xavier, 35000 Rennes (FR)
(74) Representative: STT Sozietät Thews & Thews

(57) **Abstract**

The invention relates to a multiport valve module system, comprising
a housing (1) having a central axis X, which encloses a working chamber (1.1) closed with a cover (1.2) that is assembled to the housing (1) for sealing the working chamber (1.1);
a spool (2) placed in the working chamber (1.1) and being rotatable about the axis X and being linear moveable in axial direction of the axis X;
a rotatable driving disc (3) positioned between the housing (1) and the spool (2) to drive the spool (2) and/or to drive cams (3.1);
the cams (3.1) are rotatable about the axis X and are arranged between the spool (2) and the driving disc (3) with the cams (3.1) extending in axial direction to drive the spool (2);
a first track (2.1) arranged circumferentially between the cams (3.1) and the spool (2) having a sliding surface (2.1a) onto which the cams (3.1) are sliding and with the sliding surface (2.1a) having sections (2.1b) extending in axial direction to drive the spool (2).

A direct mechanical control in axial direction and in circumferential direction of the different components is to provide together with a simple construction. This is done solely by the geometry of the sections (2.1b) and the cams (3.1) that cause an axial movement of the spool (2) and a rotation of the spool (2).

## Description

### TECHNICAL FIELD

The invention relates to a multiport valve module system, comprising a housing having a central axis X, which encloses a working chamber closed with a cover that is assembled to the housing for sealing the working chamber and a spool placed in the working chamber and being rotatable about the axis X and being linear moveable in axial direction of the axis X. The system further comprises a rotatable driving disc positioned between the housing and the spool to drive the spool and/or to drive cams. The cams are rotatable about the axis X and are arranged between the spool and the driving disc extending at least in the axial direction to drive the spool. A first track is arranged circumferentially between the cams and the spool having a sliding surface onto which the cams are sliding and with the sliding surface having sections extending in axial direction to drive the spool. It is neither relevant whether the driving disc drives the spool and/or the cams directly or indirectly nor whether the cams drive the spool directly or indirectly. It is also not relevant whether there is one single cam and/or section or if there are numerous cams and/or sections. What is decisive is the transmission of the force from the driving disc to the respective cams and from the cams to the respective sections and from the sections to the spool.

### BACKGROUND

A rotatable multi-way valve is already known from EP 3 109 522 A1, in which the spool is moved in axial direction via two discs with cams that can be rotated relative to each other and whose mechanical coupling having a backlash in circumferential direction. The rotation of the spool is caused directly by a drive shaft and without the cams. For this purpose, the drive shaft is provided with a mating shaft and a mating hole is provided on the spool, which serves as a transition part to rotate the spool directly via the drive shaft.

It is an object of the present invention to design and arrange a rotatable multiport valve module system in such a way that a direct mechanical control in axial direction and in circumferential direction of the different components is given with a simple construction.

According to an aspect of the invention, the problem is solved that due to the geometry of the sections and the cams an axial movement of the spool and a rotation of the spool is caused. In terms of process technology, the rotation of the driving disc achieves an interaction between the cams and the sections, which results in an axial movement of the spool and in a rotation of the spool. The cams and the sections are facing each other. The rotation of the spool and the axial movement of the spool are both caused by a form-fitted coupling between the rotating cams and the sections. The rotation is transmitted to the spool by cams in addition to the translation without a free disc. For this purpose, the cams and the sections have a special cam-like gripping geometry. The force of the rotating cams is transmitted from the cams to the sections and creates because of the geometry both rotation and axial movement of the spool. The resulting rotation and axial movement of the spool can occur simultaneously or sequentially. During the rotation of the cams the form-fitted coupling to the sections in circumferential direction can be temporary. This makes it possible to generate both rotation of the spool in one or in both circumferential directions and translation of the spool with the same components.

The axial direction, the radial direction, the circumferential direction (circumferentially) and the coaxial positions have a meaning in relation to the axis X. A rotation is also in relation to the axis X and means the movement in circumferential direction. An axial movement is also in relation to the axis X a movement in axial direction. Rotationally symmetric includes at least partially rotationally symmetric, likewise conical or spherical also includes at least partially conical or spherical. For the purposes of the invention, an axial movement is to be understood as meaning the same as a translational movement.

A main aspect of the mechanic of such a rotatable multi-way valve is, that the housing having an inner housing surface and the valve having an outer valve surface, whereby the housing surface and the valve surface have at least in part a rotationally symmetrical, preferably a conical or a spherical geometry such that the two surfaces, can be pressed against each other in axial direction by moving the spool in axial direction. The geometry of the cams and the sections is designed in such a way that allows to drive spool first in an axial direction from a sealed position in the housing before the spool is driven to rotate. This shape makes it possible to first loosen a seal between the spool and the housing before rotation takes place. The sequence is reversed accordingly when the spool is brought into a sealed position after rotation. The separation of the two surfaces by the axial movement is best achieved by conical geometries, because due to such a geometry the gap between the housing surface and the valve surface opens uniformly over the entire gap. This is not the situation with a spherical geometry. Depending on the properties of the chosen plastic and the force with which the spool is preloaded against the housing, the ports in the housing can be sealed with the openings without an additional gasket. Furthermore, it is provided that the working chamber having an inner housing surface and having a plurality of ports for supplying and/or discharging a medium into or out of the working chamber. The spool having at least one channel with openings for connecting at least two ports of the housing.

In a preferred and very simple solution it is provided that the cams slide directly onto the sliding surface. According to a relevant aspect of the invention, the cams are shaped on the driving disc and the sliding surface with the sections is shaped on the top side or on the bottom side of the spool. To provide such a simple construction the cams are integrated in the shape of the driving disc and the sliding surface with the sections are integrated in the shape of the spool. The driving disc and the spool are preferably each a one-piece body made of a non-abrasive material which, depending on the medium for which the valve is used, having very good sliding properties and is largely free of wear. Plastics are very well suitable for this.

According to another aspect of the invention, a stopping mechanism is assembled between the spool and the housing, whereas the rotation of the spool in at least one circumferential direction is stoppable with the stopping mechanism. This mechanism allows a defined relative movement of the driving disc in relation to the spool in the circumferential direction without the spool rotating. As a result, the cams can continue to be rotated even in the case of resistance from the sections in the circumferential direction because of a stopped spool. Within the scope of an initial solution, the locking mechanism is activated by an axial movement of the spool to an axial distance between the spool and the housing that is less than the height Hs of the stop ribs. As part of a second solution, the locking mechanism is achieved by a ratchet disc and spool teeth at the spool with the ratchet disc and the spool teeth interlock in one circumferential direction only.

It is advantageous in terms of flexibility that the spool is rotatable in both or only in one circumferential direction from the driving disc and the driving disc is rotatable in both directions. Depending on the geometry of the cams and the sections, the spool is always rotated in one direction or alternately in one and the other circumferential direction. The driving disc changes direction of rotation regularly. If the spool is rotated by the driving disc in one direction only, the spool will become locked to the housing as soon as the driving disc rotates in the opposite circumferential direction.

Regarding the force transmission from the cams to the sections, it is advantageous that a spring element is assembled between the housing and the spool, by means of which that spool is preloaded and placed in the axial direction with the surface against the driving disc. The axial preload enables the spool to be driven precisely both in the axial direction and in the circumferential direction.

To drive the spool in both directions it is advantageous that in relation to a cross sectional shape of the cam and of the section the cam having at least partially a convex and the section having at least partially a concave geometry which interlock in the axial direction as to transfer the force for driving the spool. Accordingly, an inverted geometry with concave cams and convex sections would also be advantageous. Furthermore, it is advantageous that in relation to a cross sectional shape of the cam and of the section the cam and the section having at least partially a conical or a parabolic or a rectangular geometry. Such interlocking geometries allow the force for a torque to be transmitted in the circumferential direction in both directions of rotation.

Blocking the spool in the circumferential direction is advantageously achieved in that, a claw clutch is provided as the locking mechanism for the spool in circumferential direction whereby several claws of the claw clutch are assembled circumferentially at the bottom side of the spool and several ribs, of the claw clutch are assembled circumferentially at the housing faces to the claws in such a way that a form-fitted coupling between the spool and the housing is possible in circumferential direction. The claw clutch is used to stop the rotary movement of the spool in one or more defined positions in circumferential direction, depending on different heights of the ribs. There are stop ribs stopping the spool after a first and relatively small movement of the spool in axial direction from the open position of the spool (when the spool is driveable in circumferential direction) to an axial intermediate position. This first and relatively small movement of the spool from the open position about a distance D22 to that intermediate position is initiated by slide pins and elevations on the second track. From the intermediate position the spool is moved about a distance D21 to the closed position initiated by the cams and the sections.

The stop ribs having a height Hs and defining dependent of the axial displacement or position of the spool a stopping for the claws in circumferential direction. When the spool is open the spool is rotatable and there is a gap G in axial direction between the claws and the top of the stop ribs. So, the spool is not stopped in the circumferential direction by the stop rib in the open position of the spool. With a slightly modified construction and higher stop ribs, it could also be a solution that the stop ribs stop the rotary movement of the spool independent on the axial position of the spool. For such a slightly modified construction the slide pins and the elevations are not necessary.

The anchor ribs are fixing the spool in the closed position of the spool in both circumferential directions. For this purpose, the height Ha of the anchor ribs is lower than the height Hs of the stop ribs.

With regard to the intermediate position of the spool, it is advantageous that slide pins are assembled at the housing extending in axial direction and a second track is arranged circumferentially at the spool, with the second track having a gliding surface onto which the slide pins are sliding directly. The gliding surface having elevations extending in axial direction, whereby the slide pins and the elevations are facing each other and a rotation of the slide pins directly onto the gliding surface causes an axial movement of the spool. Starting in the open position of the spool the first movement to the intermediate position initiated with the elevations on the second track and the slide pins is stopping the spool for rotation. A second movement from the spool to the closed position initiated with the sections and the cams to the intermediate position is bringing the spool to the closed position.

For a form-fitted coupling in only one circumferential direction it is advantageous that the sections and/or the cams have different geometries in the front area in relation to the two circumferential directions to achieve a temporary form-fitted coupling between the rotating cams and the sections in only one circumferential direction. This makes it possible to drive the spool with the driving disc in one circumferential direction only, whereas the driving disc can be driven in both circumferential directions. In principle, with a one-sided and form-fitted coupling the spool is intended to rotate in one circumferential direction.

To specify this one-sided drive, it is provided that a clicquet system with a toothing is provided as the locking mechanism for the spool in circumferential direction in such a way that a form-fitted coupling between the spool and the housing is possible in only one circumferential direction. The spool can be fixed by means of the housing in the case that the driving disc rotates in the opposite direction to the only possible direction of rotation of the spool.

For a connection from the ratchet disc to the housing, it is particularly advantageous that a ratchet disc assembled between the spool and the housing with the ratchet disc having ratchet pins faced to the spool and the spool having spool teeth faced to the ratchet pins, whereby the ratchet disc being connected to the housing via a tongue and groove connection in some way that the ratchet disc is moveable in the axial direction and the ratchet disc is fixed in the housing in the circumferential direction. This enables the ratchet disc to move with the spool in an axial direction when the spool is opened and closed, so that the ratchet disc is always in contact with the spool to stop the spool. This special ratchet disc allows the spool to be fixed to the housing in one circumferential direction.

The tongue and groove connection comprises recesses which are inserted into the ratchet disc in radial direction from outside and anchor ribs which are arranged in axial direction in the housing, whereby the recesses engage in the anchor ribs. This connection enables the ratchet disc to move in an axial direction and always provide a form-fitted coupling to the housing in both circumferential directions.

For driving the spool, it is advantageous that the form-fitted coupling between the cams and the sections works in the same circumferential direction in which the spool rotates and the form-fitted coupling between the clicquet system and the spool works in the opposite circumferential direction. This ensures that the spool does not rotate in the opposite direction to the direction in which it is driven by the driving disc.

There is no need for a plurality of cams, sections, teeth, pins, recesses or ribs; the solution can also be achieved with just one of these parts at a time.

It is further object of the present invention to provide a system consisting of a rotating multiport valve module system and of one or more components of a cooling system for a Battery Electric Vehicle or a Fuel Cell Electric Vehicle or any other cooling system for vehicles or for machines or for engines, in particular comprising a pump, a cooler and tube connections between said components.

It is further object of the present invention to provide a method for moving a rotating multiport valve module system comprising a housing having a central axis X, which encloses a working chamber and a spool placed in the working chamber and being rotatable about the axis X and being linear moveable in axial direction of the axis X and a rotatable driving disc is positioned between the housing to drive the spool and/or to drive cams, the cams are rotatable about the axis X and are arranged between the spool and the driving disc with the cams extend in the axial direction to drive the spool, whereby due to the rotation of the driving disc and the geometry of the sections and the cams an axial movement of the spool and a rotation of the spool is caused.

### BRIEF DESCRIPTION OF THE DRAWINGS

Various aspects of the invention, including its features and advantages, will be readily understood from the example embodiments discussed in the following detailed description and the accompanying drawings, in which:
- Figure 1: illustrates an exploded view drawing of a multiport valve module system with a claw clutch system;
- Figure 2: illustrates an exploded view drawing of a multiport valve module system with a clicquet system;
- Figure 3: illustrates a diagram showing the relation of rotation and translation of the cam valve;
- Figure 4: illustrates a detailed motion diagram of the cam valve;
- Figure 5: illustrates a graph structure of the cam valve;
- Figure 6: illustrates a diagram showing the relation of rotation and translation of the clicquet valve;
- Figure 7: illustrates a detailed motion diagram of the clicquet valve;
- Figure 8: illustrates a graph structure of the clicquet valve;
- Figure 9: illustrates a sectional view of a cam valve;
- Figure 10: illustrates a perspective view on a cover of a cam valve according to fig. 1;
- Figure 11: illustrates a perspective view on a driving disc of a cam valve according to fig. 1;
- Figure 12: illustrates a perspective view on a top side of a spool of a cam valve according to fig. 1;
- Figure 13: illustrates a perspective view on a bottom side of a spool of a cam valve according to fig. 12;
- Figure 14: illustrates a perspective view on ribs in the housing of a cam valve according to fig. 1;
- Figure 15: illustrates a sectional view of a claw clutch with claws and stop ribs;
- Figure 16: illustrates a schematic sketch of the clutch with stop ribs and anchor ribs;
- Figure 17: illustrates a movement scheme for stopping and anchoring the spool in the housing;
- Figure 18: illustrates a perspective view on a clicquet valve without a spool;
- Figure 19: illustrates a sectional view of a clicquet valve;
- Figure 20: illustrates a perspective view on a top side of a spool of a clicquet valve;
- Figure 21: illustrates a perspective view on a bottom side of a spool of a clicquet valve according to fig. 20;
- Figure 22: illustrates a perspective view on a driving disc of a clicquet valve according to fig. 2;
- Figure 23: illustrates a perspective view on a ratchet disc with ratchet pins of a clicquet valve according to fig. 2;
- Figure 24: illustrates a perspective view on the bottom side of a ratchet disc according to fig. 23 and
- Figure 25: illustrates a movement scheme for stopping the spool with the ratchet
- Figure 26: illustrates a sectional view of a multiport valve module system.

### DETAILED DESCRIPTION

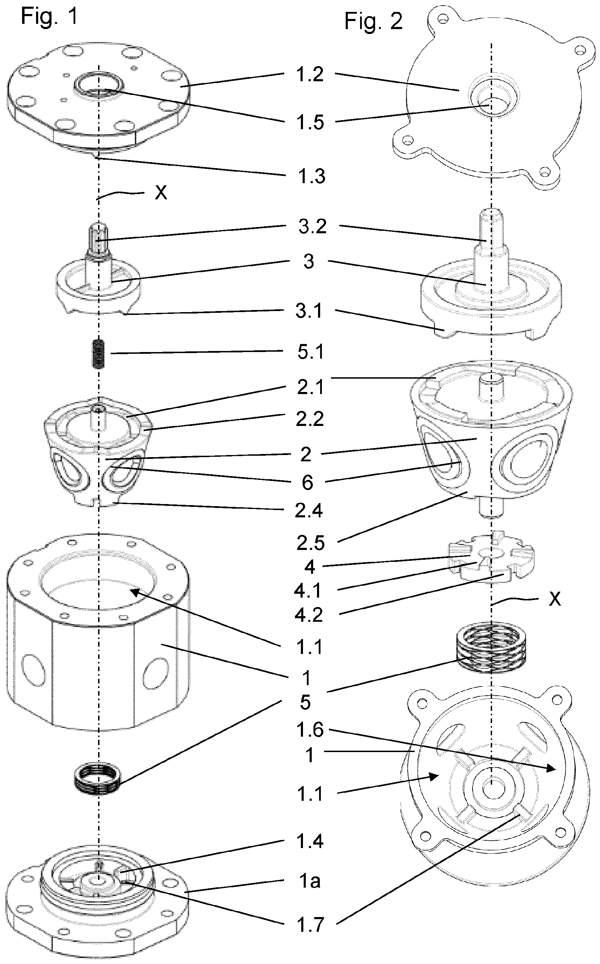

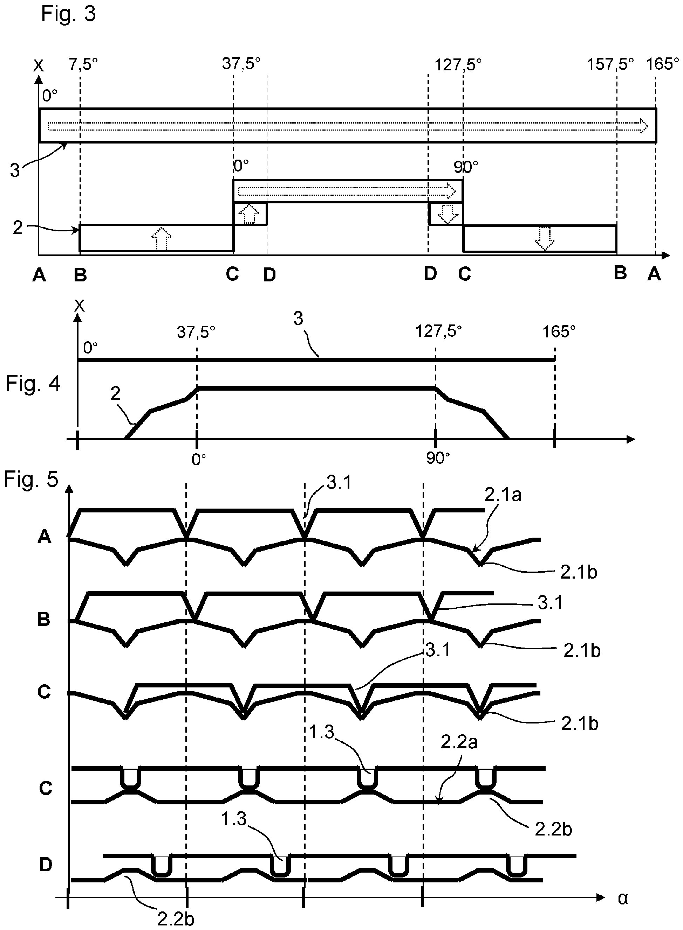

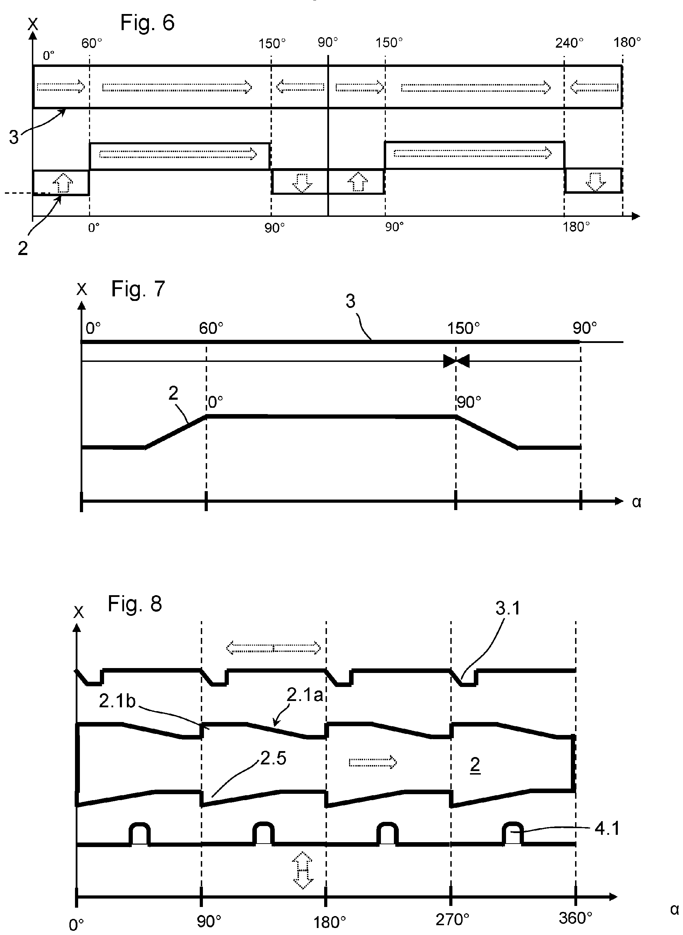

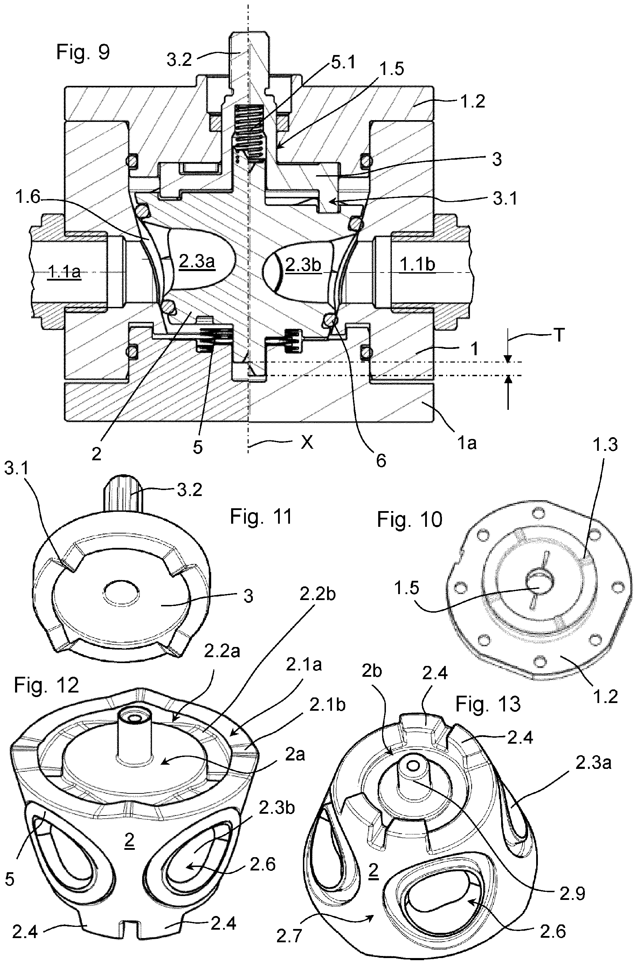

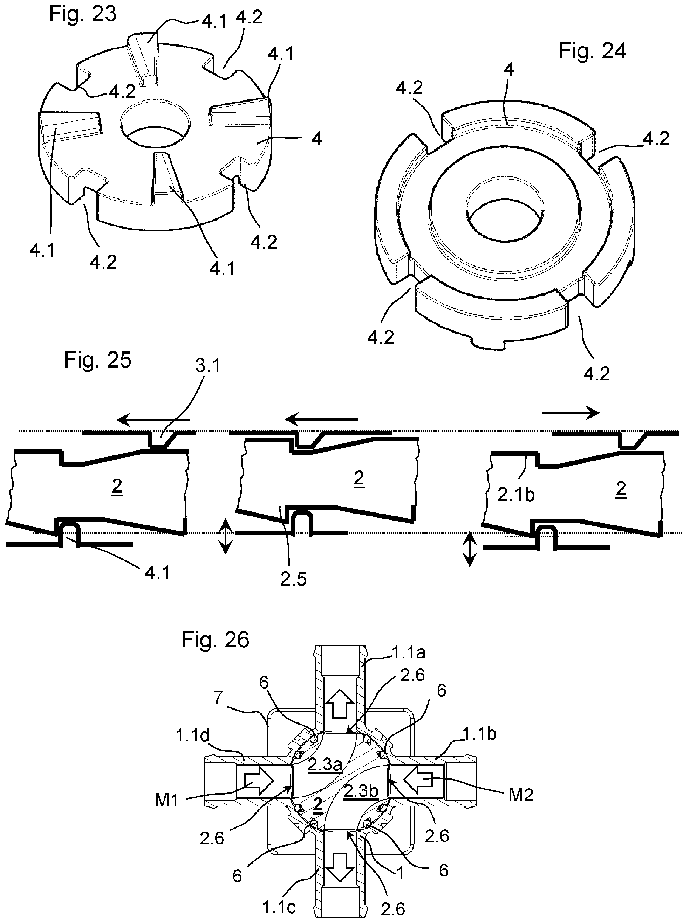

Figures 1 and 2 each show an exploded view of two embodiments of the rotatable multi-way valve according to the invention. Figure 1 shows the main components for a rotatable multi-way valve with a claw clutch system (claw clutch valve, details see fig. 3 - 5 and 9 - 17) and figure 2 shows the main components for a multi-way valve with a clicquet system (clicquet valve, details see fig. 6 - 8 and 18 - 25). Both valves having a housing 1 with a working chamber 1.1 in the housing 1. The housing 1 and thus the working chamber 1.1 are closed via a cover 1.2. A spool 2 and a driving disc 3 are arranged in the working chamber 1.1. The drive shaft 3.2 of the driving disc 3 is guided and sealed in a radial direction through a bearing bore 1.5 in the cover 1.2. The driving disc 3 is rotating in one or both circumferential directions by a specific angle via a drive 7 (see fig. 26) connected to the drive shaft 3.2, as a result of which the spool 2 is fully switched. Fully switched means that the spool 2 is first moved in an axial direction as shown in figure 9 from a closed position (right side) to an open position (left side). The spool 2 is then rotated by a certain angle to switch the channels 2.3a, 2.3b from the spool 2 in relation to the ports 1.1a - 1.1d and then the spool 2 is moved back in the axial direction to be closed. The force of the drive is transmitted directly to spool 2 in the axial direction and in the circumferential direction via the driving disc 3. The cams 3.1 provided on the driving disc 3 rotate the spool 2 and move the spool 2 in the direction of axis X. For this purpose, the cams 3.1 of the driving disc 3 slide on a first track 2.1, which is provided on the top side 2a of the spool 2 in the circumferential direction. In doing so, the cams 3.1 engage in the sections 2.1b of the spool 2, which are provided on the first track 2.1. There is a form-fit between the cams 3.1 and the sections 2.1b in one or both circumferential directions. The spool 2 is preloaded in the axial direction towards the driving disc 3 via a spring element 5 to ensure the form-fit from the cams 3.1 to the sections 2.1b in axial direction and in circumferential direction. As shown in figures 1 and 9, the spool 2 and the driving disc 3 can also be preloaded in the axial direction via an elastic element 5.1 positioned in a hole of the driving disc 3 between the spool 2 and the driving disc 3.

The housing 1 for the spool 2 of the claw clutch valve having a removable housing bottom 1a on which, as on the housing bottom of the housing 1 for the clicquet valve ribs 1.4, 1.7 are provided, which causing as a stop mechanism for the rotation of the spool (2). On the clicquet valve, a ratchet disc 4 is provided between the spring element 5 and the spool 2, by means of which the rotation of the spool 2 can be stopped while the driving disc 3 rotates. For this purpose, the ratchet disc 4 engages with recesses 4.2 in the stop ribs 1.4 on the housing bottom 1a of the housing 1. At the same time, the ratchet pins 4.1 engage in corresponding teeth 2.5 on the bottom side 2b of the spool 2. A stopping for the rotation of the spool 2 is achieved by claws 2.4 which are stopping against the stop ribs 1.4 in the circumferential direction. To ensure that the spool 2 is stopping against the stop ribs 1.4, it is first moved downwards in the axial direction via slide pins 1.3. The slide pins 1.3 slide on a second track 2.2 with elevations 2.2b on the spool 2, through which the axial movement is initiated. The spool 2 is thus moved in the axial direction by two different mechanisms, once by the pins 1.3 and once by the cams 3.1, which slide on the different tracks 2.1 and 2.2 on the spool 2. If the rotation of the spool 2 is stopped and the driving disc 3 continues to rotate, the spool 2 is moved in the axial direction to close or open the channels 2.3a, 2.3b.

Due to the respective shape of the driving disc 3, the spool 2 and the cover 1.2 in the circumferential direction, certain profiles are thus provided for moving the spool 2 in the axial direction for both embodiments. Such circumferential profiles are generated by the cams 3.1, the sections 2.1b, the slide pins 1.3 and the elevations 2.2b. When spool 2 rotates, the various channels 2.3a, 2.3b are switched. Details of the various features and modes of operation for the both embodiments are described in the following figures 2-26.

As shown in detail in fig. 26 such structures of multiport valves have the working chamber 1.1 with a plurality of ports 1.1a-1.1d. The ports (1.1a-1.1d) can be designed as nozzles or are connected with nozzles onto which, for example, a hose or a plastic tube can be plugged. In the embodiments shown there are four ports 1.1a-1.1d for supplying and/or discharging a medium M1/M2 into or out of the working chamber 1.1. According to figure 26 the medium M1 is flowing into port 1.1b, through the channel 2.3b and out of port 1.1c. The medium M2 is flowing into port 1.1d, through the channel 2.3a and out of port 1.1a. If the spool 2 is rotated by 90° to the right the medium M1 flows also into port 1.1b, but through the channel 2.3a and out of port 1.1a. The situation is similar with port 1.1d. Here the medium M2 flows through the channel 2.3a and out of port 1.1c. The spool 2 is switched with a 90° turn so that the ports 1.1a - 1.1d with their function as outlets change from top to bottom for the medium M1 and vice versa from bottom to top for the medium M2.

Fig. 3 to fig. 5 illustrate diagrams showing the relation of rotation and translation of the claw clutch valve. The diagram in figure 5 shows the four different profile curves in the circumferential direction as well as the respective pairings of two profiles. The top three pairings show three positions A-C of the cams 3.1 relative to the sections 2.1b. The lower figure shows two pairings of the slide pins 1.3 to the elevations 2.2b in the two positions C and D. Finally, four identical profiles are distributed around the circumference at 90° and are shown next to each other in figure 5. Positions A-D are also shown in figure 3 for better understanding.

The spool 2 is closed between the position A and the position B. The movement of the spool 2 in axial direction generated by the driving disc 3 with the cams 3.1 and the first track 2.1 with the sections 2.1b is maximum. In contrast, position D shows the minimum movement of the spool 2, which is open. The cams 3.1 engage in the sections 2.1b and are form-fitted in the circumferential direction so that the spool 2 can rotate.

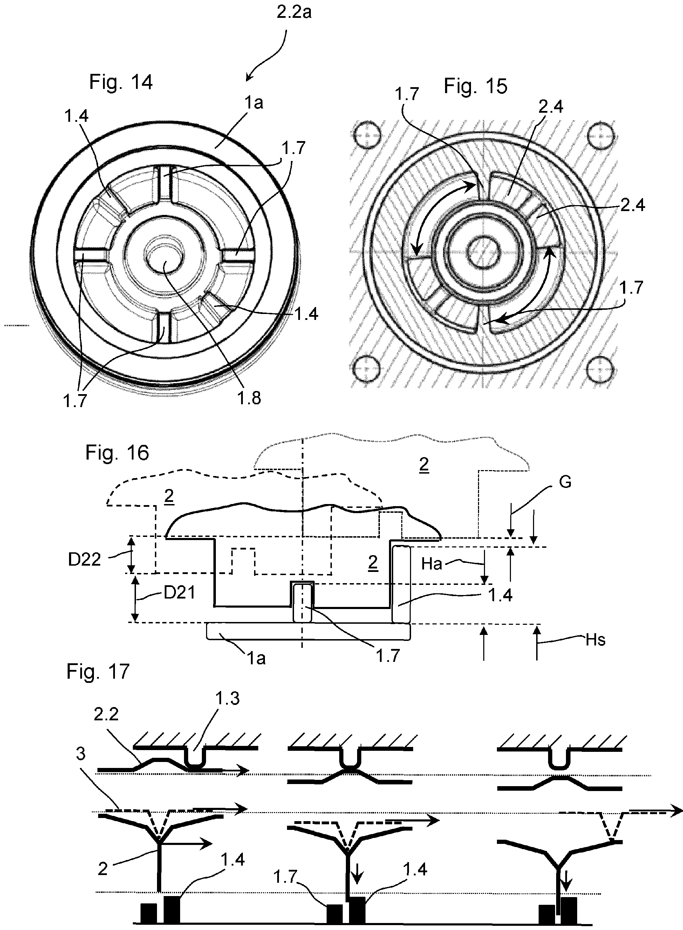

As shown in figure 3, only the driving disc 3 rotates from 0° to 7.5°, i.e., from position A to position B, and the spool 2 is motionless. In this range from A to B, no force is transmitted to the spool 2 in circumferential direction by the cams 3.1. From 7.5° to 37.5°, the spool 2 is moved upwards in translation until the intermediate position C is reached. This movement from B to C is for decoupling the spool. In the intermediate position C, the valve is open and the spool 2 can be rotated. This first upward movement corresponds to the distance D21 (see fig. 16) between the spool 2 and the housing 1 and at the same time the maximum movement due to the profile of the first track 2.1 with the sections 2.1b and the cams 3.1. Due to this first movement, the spool 2 is no longer blocked by the anchor ribs 1.7, as described in figure 16 and figure 17 in reverse order for the closing process. The distance D21 is greater than the height Ha of the anchor ribs 1.7.

A further rotation of the driving disc 3 from position C to position D raises the spool 2 by a further distance D22, which is caused by the movement of the slide pins 1.3 on the second track 2.2. The distance D22 corresponds to the maximum height difference specified by the profile of the second track 2.2 with the elevations 2.2b. Due to this second shifting, the spool 2 is no longer blocked by the stop ribs 1.4, as described in figure 16 and figure 17 in reverse order for the closing process. The distance D22 is greater than the height Hs of the stop ribs 1.4. From position C to position D, the relative position of the cams 3.1 to the sections 2.1b no longer changes.

When the spool is in the open position D the spool is rotatable and there is a small gap G (see fig. 16) in axial direction between the claws 2.4 and the top of the stop ribs 1.4. So, the spool 2 is not stopped in the circumferential direction by the stop ribs 1.4 in the open position of the spool 2. After a 90° rotation, the movement sequence is initiated from the open position of spool 2 in reverse order as described in the procedure until spool 2 is closed again.

To close the valve the spool 2 stopped at 127,5° at the intermediate position C with the stop ribs 1.4. From position D, at a position of about 120°, the spool 2 is lowered in axial direction by the distance D22 (see fig. 16), as shown in figure 17 in the left and in the middle of the three figures, so that the spool 2 is finally stopped by the stop ribs 1.4 at a total rotation of 127.5°. That first movement of the spool 2 in axial direction is initiated by the slide pins 1.3 and elevations 2.2b on the second track 2.2. The spool 2 is in a position lower than the stop ribs 1.4 having the height Hs. Therefore, the stop ribs 1.4 defining dependent of the axial displacement or position of the spool a stopping for the claws 2.4 in circumferential direction.

From the intermediate position C the spool 2 is moved about a distance D21 (see fig. 16) to the closed position B initiated by the cams 3.1 and the sections 2.1b. This movement from D to B is for coupling the spool. For each switching of the valve, the driving disc 3 rotates continuously by 165° in one direction.

Like the spool 2, the driving disc 3 always rotates in the opposite direction to the previous switching operation for each subsequent switching operation. Details of this system are described in figures 11 - 17.

Fig. 6 to fig. 8 illustrate diagrams showing the relation of rotation and translation of the clicquet valve. The diagram in figure 8 shows the four different profile curves in the circumferential direction as well as the respective pairings of two profiles. The upper pairing shows the profile of the cams 3.1 relative to the sections 2.1b. Four identical profiles are arranged at 90° around the circumference and shown next to each other in figure 5.

As shown in figure 6, the start of the rotation of the driving disc 3 is defined at 0°. In this position, the spool 2 is closed. The spool 2 is preloaded in the direction of the driving disc 3 via a spring element 5. As the driving disc 3 rotates, the spool 2 is moved upwards and opened by the force of the spring element 5 in accordance with the profile of sections 2.1b. The opening is completed after a rotation of 60°. In the open position, the driving disc 3 continues to rotate up to 150°. During this further rotation, the spool 2 is also rotated by the form-fitting between the cams 3.1 and the sections 2.1b. After the rotation of the spool 2 by 90°, the driving disc 3 rotates back by 60° so that the spool 2 is pressed down again against the spring force due to the profile of the section 2.1b. Figure 6 shows this rotation of 150° in one direction and 90° in the opposite direction for the driving disc 3. The movements of the spool 2 are shown in the graphic below. The two translational movements for opening upwards and for closing downwards, as well as the rotation of 90° between opening and closing. This process completes the switching of the spool 2. The spool 2 having rotated by 90° and the driving disc 3 having rotated by a total of 90°. Figure 6 shows a second switching of the spool 2 after the first switching. After completion of this second switching, the spool 2 and the driving disc 3 have each rotated a total of 180°.

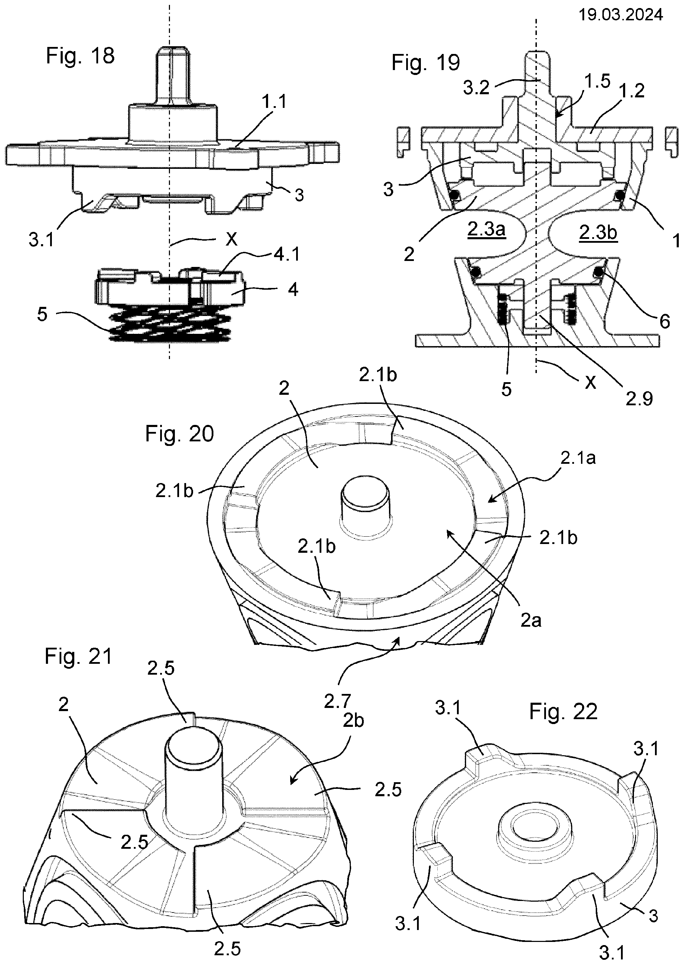

A clicquet system is provided underneath the spool 2 to prevent the spool 2 from rotating backwards during the backward movement of the driving disc 3 from 150° to 90°. The movement sequence is shown in simplified form in figure 7. The driving disc 3 rotates clockwise, for example, first by 150° and then by 60° back to 90°. In the rotation ranges of 0-60° and 150-90°, the spool 2 follows the profile of the sections 2.1b in the axial direction and does not rotate. In the open position, the spool 2 rotates by a total of 90° during the rotation of the driving disc 3 between 60-150°. Details of this system are described in figures 18-25.

Figures 9 and 19 illustrate sectional views of the both embodiments of a multiport valve module comprising the valve housing 1 with the cover 1.2 for closing a working chamber 1.1 inside of the valve housing 1. The spool 2 is located in the working chamber 1.1 and is driven by the driving disc 3. The inner housing surface 1.6 having a conical shape which is parallel to a conical valve surface 2.7 of the spool 2. A drive shaft 3.2 for connecting a drive 7 with the driving disc 3 is assembled at the driving disc 3 with the drive shaft 3.2 guided through a bearing bore 1.5 in the cover 1.2. A gasket 6 is assembled or overmolded around the openings 2.6 between the valve surface 2.7 (see fig. 13, 20) and the housing surface 1.6. The gasket 6 is designed as a resilient element by means of which the spool 2 can be preloaded against the housing 1. The spool 2 can be preloaded by a spring element 5 and placed in the axial direction against the driving disc 3. The spring element 5 is assembled opposite to the driving disc 3 on the other side of the spool 2. This construction ensures that a rotation of the spool 2 about the central axis X necessarily causes a translational motion of the spool 2 in the axial direction. Depending on the geometry of the cams 3.1 and due to the preload caused by the spring element 5, the spool 2 is moved alternately in the direction of the axis X in the working chamber 1.1.

According to the illustrated examples the spring element 5 is assembled at the bottom of the working chamber 1.1 between the spool 2 and the valve housing 1. The spring element 5 is assembled on the lower side, the narrower side of the spool 2. The spring element 5 presses the spool 2 upwards against the driving disc 3. The downward movement of the spool 2 is caused by the cams 3.1 and the slide pins 1.3 and the upward movement by the spring element 5. This has the effect that the gaskets 6 are decompressed by the spring element 5 and are compressed by the cams 3.1.

The basic principle of such valves is that by lifting the spool 2 from the rotation of the driving disc 3 the friction between the housing surface 1.6 and the valve surface 2.7 and the gaskets 6 is reduced from the beginning of the rotation, so that in addition to a fast switching of the spool 2, less force is required. This advantage is especially significant when gaskets 6 are provided. In this case the friction to be overcome between the valve surface 2.7 and the housing surface 1.6 is considerably greater than the friction between the gaskets 6 and the housing surface 1.6. The effect to reduce the friction with starting the rotation becomes possible due to the conical geometry or any similar geometry like spherical. As also shown in figures 9 and 19, the conical housing surface 1.6 of the valve housing 1 and the valve surface 2.7 are parallel to each other. Through any translational motion of the spool 2 in the direction of the axis X, the distance between the two surfaces 1.6, 2.7 is varied in radial direction to the axis X.

According to a further, not shown embodiment, the multiport valve module system having no such gaskets assembled around the circumference of the openings 2.6 at the spool 2. The seal between the spool 2 and the housing 1 is achieved by the properties of the materials chosen for the housing 1 and the spool 2, especially of plastic. Also precisely profiled surfaces of the housing surface 1.6 and the outer surface 2.2 are given for such a sealing.

According to other, not shown embodiments, the multiport valve module system can also have two, three or more than four ports. In some embodiments not shown several housings with one spool each can be arranged one behind the other in the direction of the axis X. All spools are torque proof connected to the drive shaft so that they rotate synchronously to each other and to the drive shaft.

Figure 9 illustrates a sectional view of a rotatable multi-way valve with a claw clutch system. The spool 2 is driven in the axial direction using different profiles. The components relevant for this drive are described in more detail in figures 10 to 14. As shown in figure 11, the driving disc 3 having in total four cams 3.1 distributed in the circumferential direction, which slide on a sliding surface 2.1a of the first track 2.1. The cams 3.1 are convexly shaped towards the outside. Four sections 2.1b are formed on the sliding surface 2.1a which are curved concavely below into the spool 2. The spool 2 is moved about a distance D21 initiated by the cams 3.1 and the sections 2.1b. Also, a form-fitting is achieved with the convex-concave shaping in the circumferential direction as shown in figure 5 to rotate the spool 2. In addition to the movement about the distance D21 that is transmitted from the driving disc 3 to the spool 2, an axial movement of the spool 2 about the distance D22 is generated with the use of the cover 1.2. For this purpose, the cover 1.2 having a total of four slide pins 1.3 all round, which slide on the second track 2.2 on the top side 2a of the spool 2. The second track 2.2 is arranged with its gliding surface 2.2a outside the first track 2.1 in a radial direction to the axis X. The elevations 2.2b protrude upwards in the axial direction. At the top the valve body (2) is pivoted by a stem (2.4). For this purpose, the stem (2.4) has a bearing surface 2.4a, over which the valve body The top of the spool 2 is pivoted in the hole of the driving disc 3. At the bottom, the spool 2 has a lower stud 2.9 over which it is pivoted in a recess 1.8 on the bottom of the valve housing 1. These geometries cause the spool 2 to be lowered and raised about a total displacement T, that corresponds substantially to the sum of distance D21 and distance D22.

In the closed position of the spool 2, the spool 2 is secured to the housing 1 in a circumferential direction using a claw clutch system shown in more detail in figures 12-15. For this purpose, several claws 2.4 are provided on the bottom side 2b of the spool 2, which engage in corresponding anchor ribs 1.7 on the bottom of the housing 1. The anchor ribs 1.7 are shown in more detail in figure 14. As shown in figure 16, in each case, two of the claws 2.4 engage around the anchor rib 1.7 in the closed and therefore lowest position of the spool 2. After each rotation of the spool 2, the spool 2 touching the stop ribs 1.4 with a claw 2.4. Due to this stopper, the driving disc 3 continues to rotate and the cams 3.1 overcome the form-fitting and release from the sections 2.1b. This relative movement between the cams 3.1 and the sections 2.1b opens or closes the spool 2. The claw clutch system as a mechanical stopper allows a better accuracy to control the movement of the spool 2.

In contrast to the valves with claws, the spool 2 is moved solely by the cams 3.1 in the ratchet system. For this purpose, the cams 3.1 slide along the sliding surface 2.1a of the first track 2.1 as shown in figures 18-22. Two cams 3.1 each and the sections 2.1b are not symmetrical but stepped. Turning clockwise, for example, causes the spool 2 to move purely in an axial direction, whereas turning anti-clockwise causes the spool 2 to rotate in addition to moving in an axial direction. For this purpose, the cams 3.1 and the sections 2.1b are each designed with a surface running parallel to the axis X, which effects the form-fitting in the circumferential direction.

To prevent the spool 2 from moving during clockwise rotation, a type of toothing is also provided on the bottom side 2b of the spool 2. The spool teeth 2.5 interact with a ratchet system that allows the spool 2 to rotate in one direction only. The ratchet system, which is described in more detail in figures 23-25, having a ratchet disc 4 with ratchet pins 4.1 and recesses 4.2.

The ratchet pins 4.1 are facing to the spool teeth 2.5. The ratchet disc 4 being connected to the housing 1 via a tongue and groove connection in some way that the ratchet disc 4 is moveable in the axial direction and the ratchet disc 4 is fixed in the housing 1 in the circumferential direction. This enables the ratchet disc 4 to move with the spool 2 in an axial direction when the spool 2 is opened and closed, so that the ratchet disc 4 is always in contact with the spool 2 to stop the spool 2. The recesses 4.2 are inserted into the ratchet disc 4 in radial direction from outside. Anchor ribs 1.7 are arranged in axial direction on the bottom of the housing 1, whereby the recesses 4.2 engage in the anchor ribs 1.7. This connection enables the ratchet disc 4 as shown in more detail in the sequence diagram in figure 25, to move in an axial direction and always provide a form-fitted coupling to the housing in both circumferential directions. The ratchet system as a mechanical stopper allows a better accuracy to control the movement of the spool 2.

Identical component parts are numbered with the same reference numbers. For reasons of clarity, not every component is numbered consecutively in every figure. An assignment to the applicable reference numbers results from the logic when comparing individual figures.

## Claims

1. A multiport valve module system, comprising
a) a housing (1) having a central axis X, which encloses a working chamber (1.1) closed with a cover (1.2) that is assembled to the housing (1) for sealing the working chamber (1.1);
b) a spool (2) placed in the working chamber (1.1) and being rotatable about the axis X and being linear moveable in axial direction of the axis X;
c) a rotatable driving disc (3) positioned between the housing (1) and the spool (2) to drive the spool (2) and/or to drive cams (3.1);
d) the cams (3.1) are rotatable about the axis X and are arranged between the spool (2) and the driving disc (3) with the cams (3.1) extending in axial direction to drive the spool (2);
e) a first track (2.1) arranged circumferentially between the cams (3.1) and the spool (2) having a sliding surface (2.1a) onto which the cams (3.1) are sliding and with the sliding surface (2.1a) having sections (2.1b) extending in axial direction to drive the spool (2),
**characterized in that**
f) due to the geometry of the sections (2.1b) and the cams (3.1) an axial movement of the spool (2) and a rotation of the spool (2) is caused.

2. A multiport valve module system according to claim 1,
**characterized in that**
the cams (3.1) are shaped on the driving disc (3) and the sliding surface (2.1a) with the sections (2.1b) is shaped on the top side (2a) or on the bottom side (2b) of the spool (2).

3. A multiport valve module system according to claim 1 or 2,
**characterized in that**
a stopping mechanism is assembled between the spool (2) and the housing (1), whereas the rotation of the spool (2) in at least one circumferential direction is stoppable with the stopping mechanism.

4. A multiport valve module system according to anyone of the preceding claims, **characterized in that**
the spool (2) is rotatable in both or only in one circumferential direction from the driving disc (3) and the driving disc (3) is rotatable in both directions.

5. A multiport valve module system according to anyone of the preceding claims, **characterized in that**
a spring element (5) is assembled between the housing (1) and the spool (2), by means of which that spool (2) is preloaded and placed in the axial direction with the surface (2.1a, 2.2a) against the driving disc (3).

6. A multiport valve module system according to anyone of the preceding claims, **characterized in that**
in relation to a cross sectional shape of the cam (3.1) and of the section (2.1b) the cam (3.1) having at least partially a convex and the section (2.1b) having at least partially a concave geometry which interlock in the axial direction as to transfer the force for driving the spool (2).

7. A multiport valve module system according to anyone of the preceding claims, **characterized in that** in relation to a cross sectional shape of the cam (3.1) and of the section (2.1b) the cam (3.1) and the section (2.1b) having at least partially a conical or a parabolic or a rectangular geometry.

8. A multiport valve module system according to any one of the preceding claims, **characterized in that**
a claw clutch is provided as the locking mechanism for the spool (2) in circumferential direction whereby several claws (2.4) of the claw clutch are assembled circumferentially at the bottom side (2b) of the spool (2) and several ribs (1.4, 1.7) of the claw clutch are assembled circumferentially at the housing (1) facing to the claws (2.4) in such a way that a form-fitted coupling between the spool (2) and the housing (1) is possible in circumferential direction.

9. A multiport valve module system according to any one of the preceding claims, **characterized in that**
a) slide pins (1.3) are assembled at the housing (1) extending in axial direction and
b) a second track (2.2) is arranged circumferentially at the spool (2), with the second track (2.2) having a gliding surface (2.2a) onto which the slide pins (1.3) are sliding directly and with the gliding surface (2.2a) having elevations (2.2b) extending in axial direction, whereby
c) the slide pins (1.3) and the elevations (2.2b) are facing each other and a rotation of the slide pins (1.3) directly onto the gliding surface (2.2a) causes an axial movement of the spool (2).

10. A multiport valve module system according to claims 1 to 5,
**characterized in that**
each section (2.1b) and/or the cam (3.1) having different geometries in relation to each of the two circumferential directions to achieve a temporary form-fitted coupling between the cam (3.1) and the section (2.1b) in only one circumferential direction.

11. A multiport valve module system according to any one of the claims 1 to 4,
**characterized in that**
a clicquet system with a toothing is provided as the stopping mechanism for the spool (2) in circumferential direction in such a way that a form-fitted coupling between the spool (2) and the housing (1) is possible in only one circumferential direction.

12. A multiport valve module system according to claim 11,
**characterized in that** a clicquet system comprises
a) a ratchet disc (4) assembled between the spool (2) and the housing (1) with the ratchet disc (4) having ratchet pins (4.1) faced to the spool (2) and
b) the spool (2) having spool teeth (2.5) faced to the ratchet pins (4.1), whereby the ratchet disc (4) being connected to the housing (1) via a tongue and groove connection in some way that the ratchet disc (4) is moveable in the axial direction and the ratchet disc (4) is fixed in the housing (1) in the circumferential direction.

13. A multiport valve module system according to anyone of the preceding claims, **characterized in that** the form-fitted coupling between the cams (3.1) and the sections (2.1b) works in the same circumferential direction in which the spool (2) rotates and the form-fitted coupling between the clicquet system and the spool (2) works in the opposite circumferential direction.

14. A system consisting of a rotating multiport valve module system according to any one of the preceding claims and of one or more components of a cooling system for a Battery Electric Vehicle or a Fuel Cell Electric Vehicle or any other cooling system for vehicles or for machines or for engines, in particular comprising a pump, a cooler and tube connections between said components.

15. Method for moving a rotating multiport valve module system comprising a housing (1) having a central axis X, which encloses a working chamber (1.1) and a spool (2) placed in the working chamber (1.1) and being rotatable about the axis X and being linear moveable in axial direction of the axis X and a rotatable driving disc (3) is positioned between the housing (1) to drive the spool (2) and/or to drive cams (3.1), the cams (3.1) are rotatable about the axis X and are arranged between the spool (2) and the driving disc (3) with the cams (3.1) extend in the axial direction to drive the spool (2), whereby due to the rotation of the driving disc (3) and the geometry of the sections (2.1b) and the cams (3.1) an axial movement of the spool (2) and a rotation of the spool (2) is caused.

## Amended claims

### Amended claims in accordance with Rule 137(2) EPC.

1. A multiport valve module system, comprising
a) a housing (1) having a central axis X, which encloses a working chamber (1.1) closed with a cover (1.2) that is assembled to the housing (1) for sealing the working chamber (1.1);
b) a spool (2) placed in the working chamber (1.1) and being rotatable about the axis X and being linear moveable in axial direction of the axis X;
c) a rotatable driving disc (3) positioned between the housing (1) and the spool (2) to drive the spool (2) and/or to drive cams (3.1);
d) the cams (3.1) are rotatable about the axis X and are arranged between the spool (2) and the driving disc (3) with the cams (3.1) extending in axial direction to drive the spool (2);
e) between the cams (3.1) and the spool (2) having a sliding surface (2.1a) onto which the cams (3.1) are sliding and with the sliding surface (2.1a) having sections (2.1b) extending in axial direction to drive the spool (2), e1) the cams (3.1) are shaped on the driving disc (3) and the sliding surface (2.1a) with the sections (2.1b) is shaped on the top side (2a) or on the bottom side (2b) of the spool (2), wherein the cams (3.1) slide directly onto the sliding surface (2.1a);
**characterized in that**
f) due to the geometry of the sections (2.1b) and the cams (3.1) an axial movement of the spool (2) and a rotation of the spool (2) is caused.

2. A multiport valve module system according to claim 1,
**characterized in that**
a stopping mechanism is assembled between the spool (2) and the housing (1), whereas the rotation of the spool (2) in at least one circumferential direction is stoppable with the stopping mechanism.

3. A multiport valve module system according to anyone of the preceding claims, **characterized in that**
the spool (2) is rotatable in both or only in one circumferential direction from the driving disc (3) and the driving disc (3) is rotatable in both directions.

4. A multiport valve module system according to anyone of the preceding claims, **characterized in that**
a spring element (5) is assembled between the housing (1) and the spool (2), by means of which that spool (2) is preloaded and placed in the axial direction with the surface (2.1a, 2.2a) against the driving disc (3).

5. A multiport valve module system according to anyone of the preceding claims, **characterized in that**
in relation to a cross sectional shape of the cam (3.1) and of the section (2.1b) the cam (3.1) having at least partially a convex and the section (2.1b) having at least partially a concave geometry which interlock in the axial direction as to transfer the force for driving the spool (2).

6. A multiport valve module system according to anyone of the preceding claims, **characterized in that** in relation to a cross sectional shape of the cam (3.1) and of the section (2.1b) the cam (3.1) and the section (2.1b) having at least partially a conical or a parabolic or a rectangular geometry.

7. A multiport valve module system according to any one of the preceding claims, **characterized in that**
a claw clutch is provided as a locking mechanism for the spool (2) in circumferential direction whereby several claws (2.4) of the claw clutch are assembled circumferentially at a bottom side (2b) of the spool (2) and several ribs (1.4, 1.7) of the claw clutch are assembled circumferentially at the housing (1) facing to the claws (2.4) in such a way that a form-fitted coupling between the spool (2) and the housing (1) is possible in circumferential direction.

8. A multiport valve module system according to any one of the preceding claims, **characterized in that**
a) slide pins (1.3) are assembled at the housing (1) extending in axial direction and
b) a second track (2.2) is arranged circumferentially at the spool (2), with the second track (2.2) having a gliding surface (2.2a) onto which the slide pins (1.3) are sliding directly and with the gliding surface (2.2a) having elevations (2.2b) extending in axial direction, whereby
c) the slide pins (1.3) and the elevations (2.2b) are facing each other and a rotation of the slide pins (1.3) directly onto the gliding surface (2.2a) causes an axial movement of the spool (2).

9. A multiport valve module system according to claims 1 to 4,
**characterized in that**
each section (2.1b) and/or the cam (3.1) having different geometries in relation to each of the two circumferential directions to achieve a temporary form-fitted coupling between the cam (3.1) and the section (2.1b) in only one circumferential direction.

10. A multiport valve module system according to claim 2, **characterized in that** a clicquet system with a toothing is provided as the stopping mechanism for the spool (2) in circumferential direction in such a way that a form-fitted coupling between the spool (2) and the housing (1) is possible in only one circumferential direction.

11. A multiport valve module system according to claim 10,
**characterized in that** a clicquet system comprises
a) a ratchet disc (4) assembled between the spool (2) and the housing (1) with the ratchet disc (4) having ratchet pins (4.1) faced to the spool (2) and
b) the spool (2) having spool teeth (2.5) faced to the ratchet pins (4.1), whereby the ratchet disc (4) being connected to the housing (1) via a tongue and groove connection in some way that the ratchet disc (4) is moveable in the axial direction and the ratchet disc (4) is fixed in the housing (1) in the circumferential direction.

12. A multiport valve module system according to claim 10 or 11, **characterized in that** the form-fitted coupling between the cams (3.1) and the sections (2.1b) works in the same circumferential direction in which the spool (2) rotates and the form-fitted coupling between the clicquet system and the spool (2) works in the opposite circumferential direction.

13. A system consisting of a rotating multiport valve module system according to any one of the preceding claims and of one or more components of a cooling system for a Battery Electric Vehicle or a Fuel Cell Electric Vehicle or any other cooling system for vehicles or for machines or for engines, in particular comprising a pump, a cooler and tube connections between said components.

14. Method for moving a rotating multiport valve module system comprising a housing (1) having a central axis X, which encloses a working chamber (1.1) and a spool (2) placed in the working chamber (1.1) and being rotatable about the axis X and being linear moveable in axial direction of the axis X and a rotatable driving disc (3) is positioned between the housing (1) to drive the spool (2) and/or to drive cams (3.1), the cams (3.1) are rotatable about the axis X and are arranged between the spool (2) and the driving disc (3) with the cams (3.1) extend in the axial direction to drive the spool (2), and
a first track (2.1) arranged circumferentially between the cams (3.1) and the spool (2) having a sliding surface (2.1a) onto which the cams (3.1) are sliding and with the sliding surface (2.1a) having sections (2.1b) extending in axial direction to drive the spool (2),
the cams (3.1) are shaped on the driving disc (3) and the sliding surface (2.1a) with the sections (2.1b) is shaped on the top side (2a) or on the bottom side (2b) of the spool (2), wherein the cams (3.1) slide directly onto the sliding surface (2.1a);
whereby due to the rotation of the driving disc (3) and the geometry of the sections (2.1b) and the cams (3.1) an axial movement of the spool (2) and a rotation of the spool (2) is caused.
